# EUROPÄISCHE PATENTANMELDUNG

(11) **EP 3 854 507 A1**
(43) Veröffentlichungstag der Anmeldung: **28.07.2021**
(21) Anmeldenummer: 20207676.6
(22) Anmeldetag: 16.11.2020
(51) Int. Cl.: B23D 31/00, B23D 25/00, B21B 31/10, B23D 36/00

(54) **VORRICHTUNG UND VERFAHREN ZUM QUERTEILEN EINES METALLBANDES IN EINER WALZSTRASSE**

(30) Priorität: 11.12.2019 DE 102019219309
(71) Anmelder: SMS Group GmbH, 40237 Düsseldorf (DE)
(72) Erfinder: Runkel, Thomas, 57074 Siegen (DE)
(74) Vertreter: Klüppel, Walter

(57) **Zusammenfassung**

Die Erfindung betrifft eine Vorrichtung zum Querteilen eines Metallbandes (5) in einer Walzstraße (1) umfassend eine erste Schere und wenigstens eine zweite Schere, die für unterschiedliche Schnittanforderungen ausgelegt sind, Mittel zur Auswahl und Inbetriebnahme der ersten und/oder zweiten Schere in Abhängigkeit der Dicke und/oder Geschwindigkeit des Metallbandes (5), wobei die erste und die zweite Schere quer und auch längs zur Laufrichtung des Metallbandes (5) verfahrbar angeordnet sind und dass die erste und zweite Schere wahlweise oder wechselweise in die Walzlinie einfahrbar und/oder ausfahrbar ausgebildet sind .

## Beschreibung

Die Erfindung betrifft eine Vorrichtung zum Querteilen eines Metallbandes in einer Walzstraße umfassend eine erste Schere und wenigstens eine zweite Schere, die für unterschiedliche Schnittanforderungen ausgelegt sind, sowie Mittel zur Auswahl und Inbetriebnahme der ersten und/oder zweiten Schere in Abhängigkeit der Dicke und/oder Geschwindigkeit des Metallbandes.

Die Erfindung betrifft weiterhin ein Verfahren zum Querteilen eines Metallbandes in einer Walzstraße unter Verwendung der Vorrichtung.

In Warmwalzwerken werden Bänder mit unterschiedlichen Enddicken und entsprechend unterschiedlichen Walzgeschwindigkeiten gewalzt und anschließend mittels Haspeln zu Coils aufgewickelt. Um diese Aufgabe bewältigen zu können, müssen verschiedene Trenneinrichtungen eingesetzt werden, welche für verschiedene Schnittanforderungen ausgelegt sind. Beispielsweise ist es üblich, Trommelscheren zum Querschneiden von Banddicken von 5 bis 25,4 mm bei Bandgeschwindigkeiten von 0,5 bis 3,5 m/s einzusetzen. Zum Querschneiden von Banddicken von 0,6 bis 6 mm bei Bandgeschwindigkeiten von 2,5 bis 20 m/s werden häufig Hochgeschwindigkeitsscheren eingesetzt. Weiterhin finden je nach Materialgeschwindigkeit, Materialfestigkeit, Materialtemperatur und Produktionsfolge auch Pendelscheren, Kurbelscheren und Brennschneideinrichtungen Anwendung.

Aus der DE 2522654 A1 ist eine Wechselvorrichtung für Kreismesserscheren zum Längsteilen von Metallband bekannt, die wenigstens zwei quer zum Band auf Laufschienen verfahrbare Wechselwagen zur Aufnahme je einer Kreismesserschere des gleichen Typs umfasst, wobei der in Arbeitsposition in der Scherenlinie befindliche Wechselwagen zum Austausch mit einem anderen Wechselwagen bis außerhalb des Platzbedarfs für die Arbeitsposition verfahrbar ist. Die Laufschienen erstrecken sich zu beiden Seiten der Scherenlinie um jeweils mindestens die Länge des Platzbedarfs für einen Wechselwagen. Diese Anordnung dient dazu, bedarfsweise die eine oder andere Schere zum Nacharbeiten außer Betrieb zu nehmen. Neben dem jeweils in Arbeitsposition befindlichen Wechselwagen wird ein Wechselwagen mittels Kran auf die Laufschiene aufgesetzt, dessen Schere in der Werkstatt auf das nächste Schneidprogramm eingerichtet wurde. Für die beiden Scheren gleichen Typs ist ein einziger Antrieb vorgesehen, der mittels eines an jedem Wechselwagen vorgesehenen Winkelgetriebes anschließbar ist.

Die Veröffentlichung EP 1 868 748 B1 beschreibt eine Warmwalzanlage, in welcher mehrere alternative Trenneinrichtungen in der Walzlinie hintereinander angeordnet sind. Die Trenneinrichtungen sind mittels eines Steuerungssystems bedarfsweise auswählbar.

Eine Vorrichtung und ein Verfahren der eingangs genannten Art sind beispielsweise aus der WO 2019/052902 A1 bekannt. Diese Druckschrift betrifft ein Verfahren und eine Vorrichtung zum Querteilen eines Warmbandes, wobei das Verfahren eine Dickenbestimmung des Warmbandes, das Auswählen einer ersten Trommelschere für ein dickes Warmband oder einer zweiten Trommelschere für ein dünnes Warmband aufgrund der Dicke des Warmbandes umfasst, wobei für ein dickes Warmband mit einer Dicke von 4 bis 28 mm eine erste Trommelschere ausgewählt wird und für ein dünnes Warmband mit einer Dicke von 0,6 mm bis 6 mm und einer Bandlaufgeschwindigkeit größer als 1,5 m/s eine zweite Trommelschere ausgewählt wird. Die erste und die zweite Trommelschere sind in der Walzlinie hintereinander angeordnet.

Eine solche Anordnung der Scheren in Materialflussrichtung hintereinander verlängert die Walzstraße unter Verursachung höherer Investitionskosten und höherer Wärmeverluste beim Betrieb.

Der Erfindung liegt die Aufgabe zugrunde, eine Vorrichtung sowie ein Verfahren der eingangs genannten Art bereitzustellen, mit der der vorstehend erwähnte Nachteil vermieden wird. Insbesondere soll eine Vorrichtung der eingangs genannten Art bereitgestellt werden, mit der besonders effektiv mit geringen Investitionskosten Trenneinrichtungen verschiedener Art, insbesondere je nach Schneidanforderung verschiedene Arten von Scheren in Betrieb gesetzt werden können.

Die Aufgabe wird gelöst durch eine Vorrichtung mit den Merkmalen des Anspruchs 1 sowie durch ein Verfahren mit den Merkmalen des Anspruchs 14. Vorteilhafte Ausgestaltungen der Vorrichtung und des Verfahrens ergeben sich aus den Unteransprüchen.

Nach einem Gesichtspunkt der Erfindung ist vorgesehen, dass die Vorrichtung zum Querteilen eines Metallbandes in einer Walzstraße eine erste Schere und wenigstens eine zweite Schere aufweist, die für unterschiedliche Schnittanforderungen ausgelegt sind, dass die Vorrichtung weiterhin Mittel zur Auswahl und Inbetriebnahme der ersten und/oder zweiten Schere in Abhängigkeit der Dicke und/oder Geschwindigkeit des Metallbandes aufweist und sich insbesondere dadurch auszeichnet, dass die erste und die zweite Schere quer und vorzugsweise auch längs zur Laufrichtung des Metallbandes verfahrbar angeordnet sind und dass die erste und zweite Schere wahlweise oder wechselweise in die Walzlinie einfahrbar und/oder ausfahrbar ausgebildet sind. Die Vorrichtung gemäß der Erfindung kann Teil einer kontinuierlichen oder diskontinuierlichen Gießwalzanlage sein. Diese kann beispielsweise hinter den Walzgerüsten oder vor Haspeln zum Aufwickeln des Metallbandes zu Coils angeordnet sein.

Erfindungsgemäß sind also die verschiedenen Scheren quer und vorzugsweise auch längs zur Laufrichtung des Metallbandes verschiebbar, sodass wahlweise, je nach Schnittanforderung, die eine oder die andere Schere in die Walzlinie eingeschoben oder eingefahren werden kann. Die Begriffe verschiebbar einerseits und verfahrbar andererseits werden im Sinne der vorliegenden Anmeldung synonym verwendet. Durch die Anordnung der Scheren quer zur Materialflussrichtung kann ein wesentlich größerer Schnittbereich abgedeckt werden, ohne die Anlage dadurch zu verlängern. Dadurch ergibt sich eine Einsparung von Anlagenlänge und Investitionskosten, eine Reduzierung von Wärmeverlusten in der Produktion sowie eine Erhöhung der Flexibilität bei der Produktion.

Durch den Umstand, dass die Scheren sowohl quer als auch längs zur Laufrichtung des Metallbandes verschiebbar sind, ist es möglich, beide Scheren auf einer einzigen Seite der Walzlinie anzuordnen.

Eine besonders bevorzugten Variante der Vorrichtung gemäß der Erfindung zeichnet sich dadurch aus, dass ein gemeinsamer Antrieb für beide Scheren vorgesehen ist, an das wahlweise die erste oder die zweite Schere ankoppelbar ist. Ein Antrieb im Sinne der vorliegenden Erfindung umfasst im Wesentlichen wenigstens einen Motor und ein Getriebe und ggf. eine Kupplung zwischen Motor und Getriebe.

Bei einer weiteren bevorzugten Variante der Vorrichtung gemäß der Erfindung ist vorgesehen, dass der gemeinsame Antrieb für verschiedene Scherentypen ausgelegt ist.

Erfindungsgemäß kann vorgesehen sein, dass die erste und die zweite Schere gleichzeitig oder wechselweise neben der Walzlinie in eine Parkposition verfahrbar sind.

Beispielsweise können die erste und die zweite Schere aus der Walzlinie an eine einzige Stelle der Walzstraße derart herausfahrbar sein, dass sie parallel zur Walzlinie nebeneinander angeordnet sind. Bei einer solchen Anordnung ist es vorteilhaft, wenn der gemeinsame Antrieb auf der der Parkposition gegenüberliegenden Seite der Walzlinie angeordnet ist.

Eine erste Schere kann beispielsweise als herkömmlichen Trommelschere ausgebildet sein, wohingegen die zweite Schere als Hochgeschwindigkeits-Trommelschere ausgebildet sein kann. Die Trommelschere kann beispielsweise für das Schopfen des Metallbandes am Bandanfang und am Bandende ausgelegt sein. Weiterhin kann die Trommelschere zum Teilen des Metallbandes oder auch zum Häckseln des Materials ausgelegt sein. Die Trommelschere kann beispielsweise als Trommelschere für eine Banddicke von 6 bis 28 mm bei einer Bandgeschwindigkeit von kleiner oder gleich 2,5 m/s ausgebildet sein. Die zweite Schere kann beispielsweise als Hochgeschwindigkeits-Trommelschere für eine Banddicke von 0,6 bis 6 mm bei einer Bandgeschwindigkeit von 2,5 bis 20 m/s ausgelegt sein.

Ein der Hauptaufgaben der Trommelschere in der Walzstraße ist das Schopfen des Metallbandes am Bandanfang und Bandende. Weiterhin kann die Trommelschere zum Teilen des Metallbandes eingesetzt werden und in speziellen Fällen auch zum Häckseln des Materials.
Trommelscheren besitzen zwei übereinanderliegende Messertrommeln, in die die Messer eingebaut werden. Die Messertrommeln sind in einem festen Abstand zueinander drehbar in den Scherenständern gelagert. Die Trommelschere der Vorrichtung gemäß der Erfindung kann für eine Materialgeschwindigkeit von 0,2 bis 3,5 m/s ausgelegt sein. Grundsätzlich kann auch bei geringeren oder höhere Materialgeschwindigkeiten geschnitten werden. Der Schnittbereich der Trommelschere kann eine Materialdicke von unter 2 bis über 80 mm überdecken.

Die Trommelschere kann von einem oder mehreren Motoren angetrieben sein und umfasst vorzugsweise ein Getriebe mit einer Untersetzung von 1:5 bis 1:25. Durch diese Untersetzung reduziert sich Motordrehzahl auf die gewünschte Trommeldrehzahl. Da die Messer möglichst mit der gleichen Horizontalgeschwindigkeit wie das Material bewegt werden sollen, errechnet sich die Trommeldrehzahl aus dem Trommeldurchmesser, der Horizontalgeschwindigkeit der Messer bei Schnittbeginn und der gewünschten Voreilung unter Berücksichtigung des Geschwindigkeitsverlustes während des Schnitts. Zur Verringerung des Geschwindigkeitsverlustes kann eine Zusatzschwungmasse, vorzugsweise auf der ersten Getriebestufe, vorgesehen sein. Die Zusatzschwungmasse kann zuschaltbar sein.

Die Trommelschere kann als Start-/Stopp Scheren ausgeführt sein, d.h. die Schere wird in weniger als einer Umdrehung auf Schnittgeschwindigkeit beschleunigt und nach dem Schnitt mittels des Motors und/oder durch Bremsen in weniger als einer Umdrehung wieder auf Stillstand verzögert. Um den Anlaufwinkel zu erhöhen, kann die Messertrommel vor dem Schnitt gegen Bandlaufrichtung gedreht werden, dabei darf kein Messer Kontakt mit dem Produktionsmaterial bekommen. Sinngemäß gilt das gleiche auch für die Verzögerungsphase.

Die Trommelschere kann mit bogenförmigen Messer ausgestattet sein, damit der Bandkopf nicht rechtwinklig ist, sondern gerundet und damit in nachfolgenden Einrichtungen leichter transportiert werden kann und Verschleiß an den weiteren Einrichtungen vermindert wird.

Die Befestigung der Messer in der Messertrommel kann durch keilförmige Klemmstücke erfolgen, die mittels Schrauben oder Durchgangsschrauben befestigt werden. Vorteilhaft sind auch Verschließleisten vor der Messerbrust und hinter den Keilstücken.

Eine besonders vorteilhafte Halterung der Klemmstücke kann durch hydraulisch zu lösende Klemmzylinder mit Vorspannung durch z.B. Tellerfedern realisiert werden.

Die Trommelschere kann mit mehreren Messerpaaren ausgestattet sein. Damit können durch unterschiedliche Messerformen unterschiedliche Konturen am Bandanfang und Bandende erzielt werden.

Auch wird durch mehrere Messerpaare am Trommelumfang das Häckseln von Produktionsmaterial verbessert. Eine Anordnung von zwei Messerpaaren kann durch 180° gegenüberliegende Messer erreicht werden. Bei einer eine antriebsoptimierte Variante kann die Anordnung im Abstand von weniger als 180°, vorzugsweise 90°/270° vorgesehen sein. Dadurch erhöht sich der Anlaufwinkel bei Reduzierung der notwendigen Antriebsleistung.

Der Anlaufwinkel der Trommelschere kann bei Start-Stopp Betrieb maximal 300° betragen. Zur Beschleunigung müssen die Massen der Trommelschere in einer begrenzten Zeit beschleunigt werden. Daher ist es vorteilhaft, wenn die Trommelschere für eine maximale Geschwindigkeit von 2,5 - 3,5 m/s ausgelegt ist.

Wie vorstehend erwähnt, kann die zweite Schere als Hochgeschwindigkeitsschere ausgebildet sein.

Die Begrenzung der maximalen Geschwindigkeit wird bei der Hochgeschwindigkeitsschere dadurch umgangen, dass die Messertrommeln in vertikaler Richtung auseinanderfahrbar ausgebildet sind. So können die Messertrommeln drehen, ohne einen Schnitt auszulösen. Die Messertrommeln werden mit geringerer Geschwindigkeit permanent gedreht. Zum Schnitt werden der Messertrommeln vorzugsweise in mehreren Umdrehungen auf die Bandgeschwindigkeit beschleunigt. Dadurch verringert sich die erforderliche Antriebsleistung wesentlich.

Erst zum Schnitt werden die Messertrommeln vertikal zugestellt. Diese vertikale Zustellung kann durch Zylinderbewegung, durch eine Lagerung der oberen Messertrommel in einer Schwinge oder durch Lagerung der Messertrommeln in Exzenterbuchsen realisiert werden. Durch Synchronisation der Drehbewegung und Zustellbewegung treffen die Messer nur gerade zum Zeitpunkt des Schnitts aufeinander. Mittels der Zustellbewegung werden die Messertrommeln bis zum nächsten Umlauf der Messer wieder geöffnet. Der Antrieb der Messertrommeln erfolgt in geöffneter Stellung.

Beim Schnitt sind die Messertrommeln vorzugsweise über Kammwalzen gekoppelt. Wenn die Messertrommeln mittels der Exzenterbuchsen vertikal geöffnet werden, haben die Kammwalzen an den Messertrommeln keinen Kontakt mehr.

Bei Antrieb der Messerträger mit Wellenlagerungen in Exzenterbuchsen werden die Messertrommeln bei vertikaler Öffnung über ein vorgelagertes Getriebe angetrieben.

Nach einer weiteren Variante können über ein Vorlegegetriebe die beiden Messertrommeln auch in auseinandergefahrenem Zustand gemeinsam angetrieben werden. Erst beim Schnitt kommen dann die Kammwalzen der Messertrommeln in Kontakt und übernehmen die Drehmomentübertragung während des Schnitts.

Der Betrieb der Hochgeschwindigkeitsschere kann über drei Antriebe erfolgen, wobei der Antrieb der oberen Messertrommel und die Antrieb der unteren Messertrommel über Gelenkwellen erfolgt. Ein Unabhängiger Antrieb bewerkstelligt die Zustellbewegung mit Zylindern.

Alternativ kann der der Betrieb der Hochgeschwindigkeitsscheren über zwei Antriebe erfolgen, nämlich über einen Antrieb der oberen Messertrommel und einen Antrieb unteren Messertrommel über eine Gelenkwelle. Die Zustellbewegung wird über Exzenterbuchsen bewerkstelligt.

Nach einer weiteren Variante können sowohl die Messertrommeln als auch die Exzenterbuchsen über einen einzigen gemeinsamen Antrieb bewegt werden.

Bevorzugt ist in der Walzstraße wenigstens eine sich quer zur Laufrichtung des Metallbandes erstreckende Scherengasse vorgesehen, durch die die erste oder die zweite Schere in die Walzlinie einfahrbar oder ausfahrbar ist.

Weiterhin kann ein Zwischenrollgang vorgesehen sein, der in die Scherengasse einfahrbar ist, wenn sich beide Scheren in der Parkposition befinden.

Bei einer besonders bevorzugten Variante der Erfindung ist vorgesehen, dass der Zwischenrollgang an den gemeinsamen Antrieb ankoppelbar ist.

Vorzugsweise ist ein Verschiebesystem für die Scheren vorgesehen, das so ausgebildet ist, dass die erste oder die zweite Schere jeweils quer und parallel zur Walzlinie verfahrbar sind.

Bei einer besonders vorteilhaften Variante der Vorrichtung ist vorgesehen, dass der gemeinsame Antrieb feststehend neben der Walzlinie auf einer der Parkposition der Scheren gegenüberliegenden Seite der Walzlinie angeordnet ist.

Der gemeinsame Antrieb kann ein wenigstens zweistufiges Getriebe mit einem separaten Getriebeausgang hinter einer ersten Getriebestufe umfassen. Vorzugsweise ist eine Getriebestufe vorgesehen, die eine Untersetzung zwischen 1 : 5 und 1 : 25 aufweist. Damit kann die Motordrehzahl auf die gewünschte Trommeldrehzahl der ersten Schere reduziert werden. Da die Messer der Trommelschere möglichst mit der gleichen Horizontalgeschwindigkeit wie das Metallband bewegt werden sollen, ergibt sich die Trommeldrehzahl aus dem Trommeldurchmesser, der Horizontalgeschwindigkeit der Messer bei Schnittbeginn und der gewünschten Voreilung unter Berücksichtigung des Geschwindigkeitsverlusts während des Schnitts. Zur Verringerung des Geschwindigkeitsverlusts kann vorgesehen sein, eine Zusatzschwungmasse auf der ersten Getriebestufe vorzusehen. Erfindungsgemäß kann vorgesehen sein, dass diese Zusatzschwungmasse erforderlichenfalls zuschaltbar ist.

Weiterhin kann erfindungsgemäß vorgesehen sein, dass unterhalb der Scherengasse in der Walzstraße eine Schrottabfuhr mit einem Schrottbunker vorgesehen ist, der etwa von der Trommelschere abgeschnittenes Material aufnehmen kann. In diesem Bunker kann auch ein Förderband oder mindestens ein verfahrbarer Schrottkübel vorgesehen sein.

Zweckmäßigerweise weisen die erste und die zweite Schere jeweils Mittel zum lösbaren Anschließen an den gemeinsamen Antrieb auf.

Beispielsweise kann der gemeinsame Antrieb eine vorzugsweise ausstellbare Scherenkupplung und eine vorzugsweise ausstellbare Scherenspindel aufweisen.

Die Hochgeschwindigkeits-Trommelschere der Vorrichtung gemäß der Erfindung umfasst zweckmäßigerweise Messertrommeln, die in vertikaler Richtung auseinander und zusammengefahren werden können. Sind die Messertrommeln auseinandergefahren, können diese sich drehen, ohne einen Schnitt auszulösen. Diese werden vorzugsweise mit geringer Geschwindigkeit permanent gedreht und zur Durchführung eines Schnitts in mehreren Umdrehungen auf die Geschwindigkeit des Metallbandes beschleunigt und zugestellt. Um den Antrieb auf beide Messertrommeln verteilen zu können, umfasst die Hochgeschwindigkeits-Trommelschere wenigstens ein vorzugsweise direkt an der Schere angebautes Vorgelegegetriebe. Während des Schnitts können die Messertrommeln der Hochgeschwindigkeits-Trommelschere über Kammwalzen gekoppelt sein.

Die Messertrommeln der Hochgeschwindigkeits-Trommelschere sind vorzugsweise in Exzenterbuchsen gelagert. Eine solche Lagerung ist beispielsweise aus der EP 1 099 502 A1 bekannt. Durch eine Synchronisation der Drehbewegung und der Zustellbewegung der Messertrommeln treffen die Messer nur zum Zeitpunkt des Schnitts aufeinander. Für die Exzenterbuchsen kann ein separater Antrieb vorgesehen sein, welcher die Messertrommeln der Hochgeschwindigkeits-Trommelschere synchron mit deren Drehung in vertikaler Richtung bewegt.

Bei einer zweckmäßigen Variante der Vorrichtung gemäß der Erfindung sind Mittel zur Bestimmung der Dicke und/oder der Geschwindigkeit des Metallbandes vorgesehen.

Ein weiterer Gesichtspunkt der Erfindung betrifft ein Verfahren zum Querteilen eines Metallbandes in einer Walzstraße unter Verwendung der vorstehend beschriebenen Vorrichtung, wobei das Verfahren eine Bestimmung der Dicke und/oder Geschwindigkeit und/oder Beschaffenheit des Bandes umfasst, wobei gegebenenfalls in Abhängigkeit der Bandgeschwindigkeit und/oder der Banddicke und/oder der Beschaffenheit des Bandes die erste oder die zweite Schere ausgewählt und in die Walzlinie eingefahren wird.

Wenn beide Scheren sich in der Parkposition befinden, kann der Zwischenrollgang in die Walzlinie eingefahren werden.

Bevorzugt sieht das Verfahren eine automatische Einstellung des Bandzuges in Abhängigkeit der ausgewählten Schere vor. Der Bandzug kann mittels mindestens wenigstens einer Treibereinrichtung eingestellt werden. Der optimale Bandzug kann gegenüber vorgelagerten Einrichtungen, wie z.B. den Walzgerüsten oder auch nachgelagerten Einrichtungen, wie z. B. Haspel eingestellt werden. Wird vor und/oder hinter der Trenneinrichtung eine Treibereinrichtung eingesetzt, kann der Bandzug während des Schnitt definiert eingestellt werden, z.B. zuglos oder mit geringem Bandzug.

Vorzugsweise wird mittels wenigstens eines Steuerungssystems in Abhängigkeit der gewählten Schere und des durchzuführenden Schnitts der Zeitpunkt für das in -und außer Eingriff Bringen der Treibereinrichtung gesteuert.

Die Erfindung wird nachstehend unter Bezugnahme auf ein in den beigefügten Zeichnungen dargestelltes Ausführungsbeispiel erläutert.

Es zeigen:
- Fig. 1: eine schematische Darstellung der Vorrichtung gemäß der Erfindung in Form einer Draufsicht,
- Fig. 2 A-C: eine der Darstellung gemäß Figur 1 entsprechende Darstellung, in welche ein Scherenwechsel veranschaulicht ist,
- Fig. 3 A-C: eine Darstellung, die das Antriebsschema der ersten und der zweiten Schere sowie das gemeinsame Antriebsschema für beide Scheren veranschau licht,
- Fig. 4 A-B: die Antriebsschemata für die erste Schere (Figur 4 A) und die zweite Schere (Figur 4 B) jeweils im angekoppelten Zustand,
- Fig. 5: eine schematische Darstellung des in die Walzlinie eingefahrenen und an den gemeinsamen Antrieb angekoppelten Zwischenrollgangs und
- Fig. 6: einen Querschnitt durch eine Walzlinie mit der Vorrichtung gemäß der Erfindung.

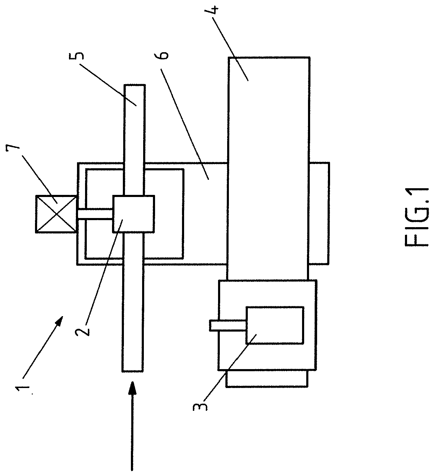

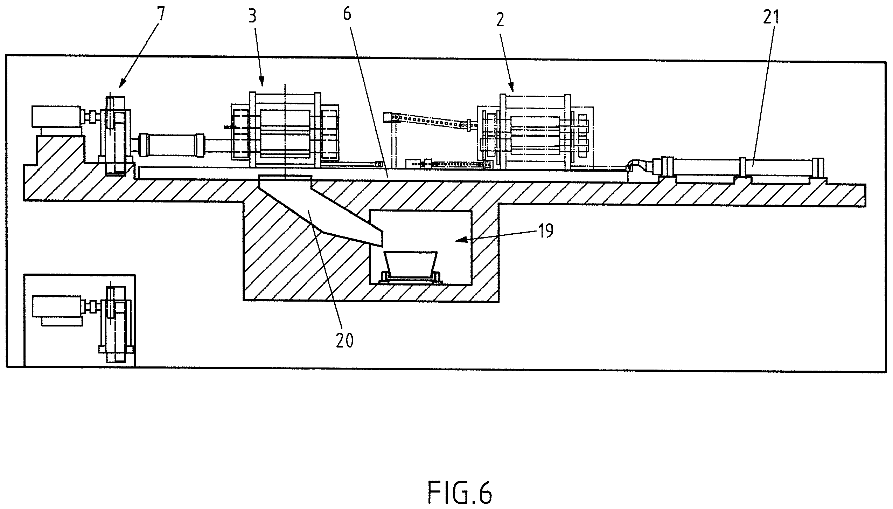

In Figur 1 ist eine Draufsicht auf eine Walzstraße 1 dargestellt, die beispielsweise als Warmband-Straße ausgelegt ist. In die durch die Walzstraße 1 definierte Walzlinie ist eine als Hochgeschwindigkeits-Trommelschere 2 ausgebildete Schere eingefahren. Neben der Walzlinie befindet sich eine konventionelle Trommelschere 3 in einer Parkposition. Die Trommelschere 3 ist auf einer Verschiebeplattform 4 angeordnet, mit welcher diese parallel zur Laufrichtung des in der Walzstraße 1 zu walzenden Metallbandes 5 verschiebbar ist. Die Verschiebeplattform 4 ist mit der Trommelschere 3 parallel zur Laufrichtung des Metallbandes 4 entlang der Walzlinie verschiebbar. Mittels einer weiteren Verschiebeeinrichtung (siehe Figur 6) sind, wie nachstehend noch im Detail erläutert wird, die Hochgeschwindigkeits-Trommelschere 2 und die Trommelschere 3 jeweils quer zur Laufrichtung des Metallbandes 5 verschiebbar und wahlweise oder wechselweise in die Walzlinie einfahrbar und/oder ausfahrbar. In der Walzlinie ist eine Scherengasse 6 in Form einer Fahrbahn für beide Scheren 2, 3 vorgesehen.

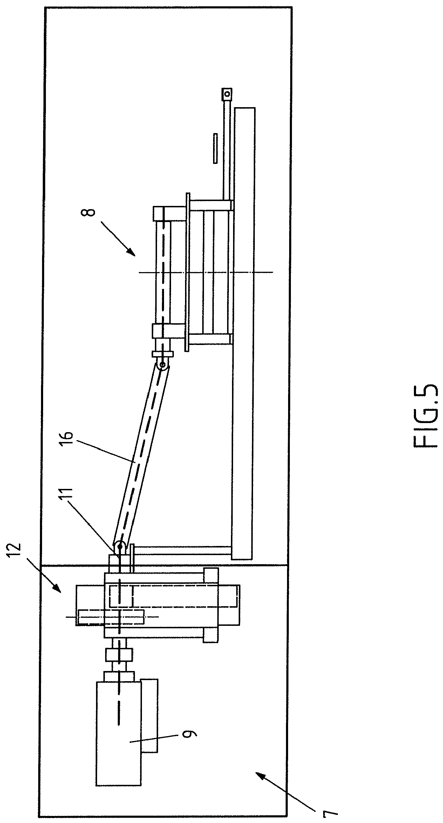

Bei der in Figur 1 gezeigten Anordnung ist eine Parkposition sowohl für die Trommelschere 3 als auch für die Hochgeschwindigkeits-Trommelschere 2 auf einer Seite der Walzlinie vorgesehen, wohingegen auf der gegenüberliegenden Seite der Walzlinie ein gemeinsamer Antrieb 7 (Multischerenantrieb) für beide Scheren 2, 3, d. h. für die Hochgeschwindigkeits-Trommelschere 2 und die Trommelschere 3, sowie für einen Zwischenrollgang 8 (siehe Figur 5) vorgesehen ist.

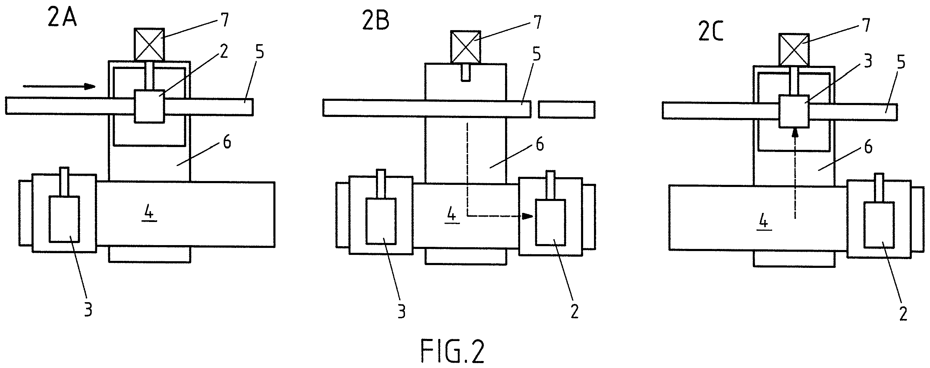

Figur 2 veranschaulicht schematisch einen Scherenwechsel, wobei Figur 2A eine der Figur 1 entsprechende Draufsicht zeigt, in der sich, ebenso wie in Figur 1, die Hochgeschwindigkeits-Trommelschere 2 in der Betriebsstellung befindet, d. h. in die Walzlinie eingefahren ist und an den gemeinsamen Antrieb 7 angekoppelt ist.

Figur 2B veranschaulicht das Herausfahren der Hochgeschwindigkeits-Trommelschere aus der Walzlinie in eine Parkposition auf der Verschiebeplattform 4. Zu diesem Zweck wird die Verschiebeplattform 4 in eine Stellung verfahren, in der die Hochgeschwindigkeits-Trommelschere 2 mittels des in Figur 2 nicht dargestellten Verschiebesystems nach Abkoppeln von dem gemeinsamen Antrieb 7 auf die Verschiebeplattform 4 verschoben werden kann. Sodann wird die Verschiebeplattform 4 in Materialflussrichtung (siehe Pfeil in Figur 2 A), d. h. in Laufrichtung des Metallbandes 5, verfahren bzw. verschoben. In dieser Stellung kann die Trommelschere 2 in die Walzlinie eingeschoben bzw. eingefahren werden und an den gemeinsamen Antrieb 7 angekoppelt werden, wie dies andeutungsweise in Figur 2C dargestellt ist.

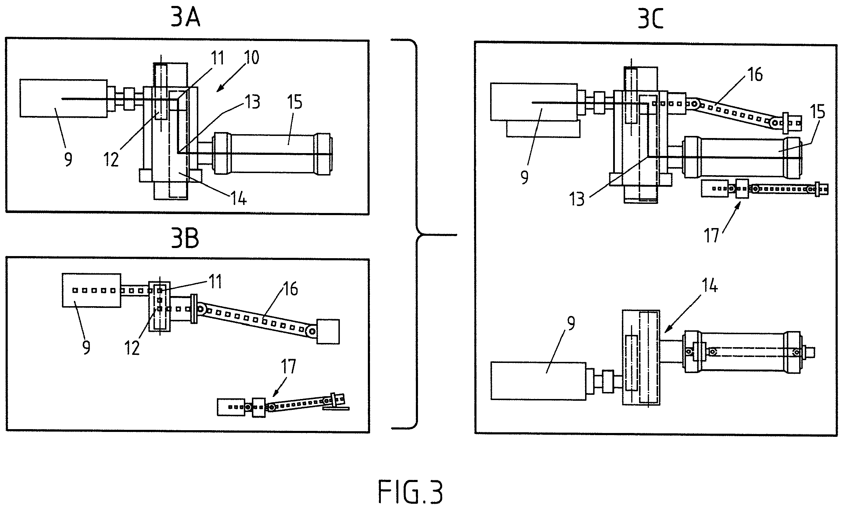

Wie dies insbesondere aus Figur 3 entnehmbar ist, umfasst der gemeinsame Antrieb 7 wenigstens einen Motor 9 und ein zweistufiges Getriebe 10 mit einem ersten Getriebeausgang 11 hinter einer ersten Getriebestufe 12 und einen zweiten Getriebeausgang 13 hinter einer zweiten Getriebestufe 14. Der gemeinsame Antrieb 7 umfasst eine Scherenkupplung 15, an welche die Trommelschere 3 anschließbar ist sowie eine Scherenspindel 16, an welche die Hochgeschwindigkeits-Trommelschere 2 anschließbar ist. In Figur 3A ist der Kraftfluss des Antriebs der Trommelschere 3 mit einer dicken schwarzen Linie eingezeichnet. In Figur 3B ist der Kraftfluss der Hochgeschwindigkeit-Trommelschere mit einer dicken gestrichelten Linie eingezeichnet. In Figur 3 C sind die mit dem gemeinsamen Antrieb 7 verwirklichten Antriebsschemata eingezeichnet. Mit dem Bezugszeichen 17 ist ein separater Exzenterantrieb für die Verstellung eines Exzentergetriebes 18 der Hochgeschwindigkeits-Trommelschere 2 bezeichnet. Der separate Exzenterantrieb 17 ist Teil der Hochgeschwindigkeits-Trommelschere 2.

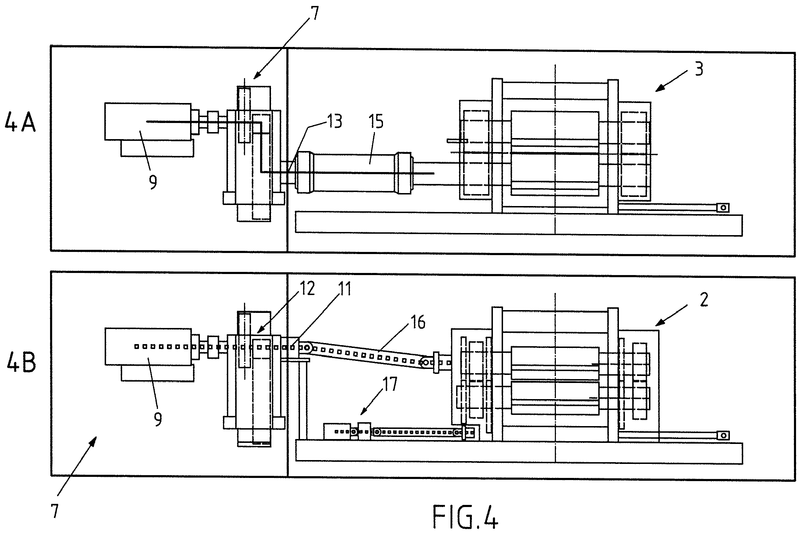

In Figur 4A ist ein Querschnitt durch die Walzlinie dargestellt, wobei die Trommelschere 3 in die Walzlinie eingefahren ist und über die Scherenkupplung 15 an die zweite Getriebestufe 14 des gemeinsamen Antriebs 7 angeschlossen ist. Figur 4B zeigt hingegen die an die erste Getriebestufe 12 des gemeinsamen Antriebs 7 angeschlossene Hochgeschwindigkeits-Trommelschere 2.

In Figur 5 ist ein Querschnitt durch die Walzlinie dargestellt, in der der Zwischenrollgang 8 in die Walzlinie eingefahren ist. In dieser Stellung des Zwischenrollgangs 8 befinden sich sowohl die Trommelschere 3 als auch die Hochgeschwindigkeits-Trommelschere 2 in der Parkposition neben der Walzlinie. Der Zwischenrollgang 8 ist über die Scherenspindel 16 an die erste Getriebestufe 12 des gemeinsamen Antriebs 7 angeschlossen. Der Kraftfluss zwischen dem Motor 9 des gemeinsamen Antriebs 7 und dem Zwischenrollgang 8 ist durch eine dicke gestrichelte Linie dargestellt.

Figur 6 zeigt eine mögliche Konfiguration der Vorrichtung gemäß der Erfindung und der Walzstraße 1 mit einem gemeinsamen Antrieb 7 auf einer Seite der Walzlinie sowie mit der Trommelschere 3 in Eingriff mit der Scherenkupplung 15 des gemeinsamen Antriebs 7. Die in gestrichelten Linien dargestellte Hochgeschwindigkeits-Trommelschere 2 befindet sich in der Parkposition auf der dem gemeinsamen Antrieb 7 gegenüberliegenden Seite der Walzlinie bzw. Walzstraße 1. Unterhalb der Walzstraße 1 etwa auf Höhe der Trommelschere 3 ist ein Schrottbunker 19 vorgesehen, in den das von der Trommelschere 3 abgeschnittene Material über eine Schrottrutsche 20 abführbar ist. Eine Querverschiebung der Scheren 2, 3 ist mittels eines Verschiebezylinders 21 möglich, der Teil des Verschiebesystems ist.

### Bezugszeichenliste

- 1: Walzstraße
- 2: Hochgeschwindigkeits-Trommelschere
- 3: Trommelschere
- 4: Verschiebeplattform
- 5: Metallband
- 6: Scherengasse
- 7: gemeinsamer Antrieb
- 8: Zwischenrollgang
- 9: Motor
- 10: Getriebe
- 11: erster Getriebeausgang
- 12: erste Getriebestufe
- 13: zweiter Getriebeausgang
- 14: zweite Getriebestufe
- 15: Scherenkupplung
- 16: Scherenspindel
- 17: Exzenterantrieb
- 18: Exzentergetriebe
- 19: Schrottbunker
- 20: Schrottrutsche
- 21: Verschiebezylinder

## Patentansprüche

1. Vorrichtung zum Querteilen eines Metallbandes (5) in einer Walzstraße (1) umfassend eine erste Schere und wenigstens eine zweite Schere, die für unterschiedliche Schnittanforderungen ausgelegt sind, Mittel zur Auswahl und Inbetriebnahme der ersten und/oder zweiten Schere in Abhängigkeit der Dicke und/oder Geschwindigkeit des Metallbandes (5), **dadurch gekennzeichnet, dass** die erste und die zweite Schere quer und vorzugsweise auch längs zur Laufrichtung des Metallbandes (5) verfahrbar angeordnet sind und dass die erste und zweite Schere wahlweise oder wechselweise in die Walzlinie einfahrbar und/oder ausfahrbar ausgebildet sind.

2. Vorrichtung nach Anspruch 1, **dadurch gekennzeichnet, dass** ein gemeinsamer Antrieb (7) für beide Scheren vorgesehen ist, an den wahlweise die erste oder die zweite Schere ankoppelbar ist.

3. Vorrichtung nach Anspruch 1 oder 2, **dadurch gekennzeichnet, dass** die erste und die zweite Schere gleichzeitig oder wechselweise neben der Walzlinie in eine Parkposition verfahrbar sind.

4. Vorrichtung nach einem der Ansprüche 1 bis 3, **dadurch gekennzeichnet, dass** die erste und die zweite Schere aus der Walzlinie an eine einzige Seite der Walzstraße (1) derart herausfahrbar sind, dass sie parallel zur Walzlinie nebeneinander angeordnet sind.

5. Vorrichtung nach einem der Ansprüche 1 bis 4, **dadurch gekennzeichnet, dass** die erste Schere als Trommelschere (3) ausgebildet ist und dass die zweite Schere als Hochgeschwindigkeits-Trommelschere (2) ausgebildet ist.

6. Vorrichtung nach einem der Ansprüche 1 bis 5, **dadurch gekennzeichnet, dass** die erste Schere als Trommelschere (3) für eine Banddicke von 6 bis 28 mm bei einer Bandgeschwindigkeit von kleiner oder gleich 2,5 m/s ausgebildet ist und dass die zweite Schere als Hochgeschwindigkeits-Trommelschere (2) für eine Banddicke von 0, 6 bis 6 mm bei einer Bandgeschwindigkeit von 2, 5 bis 20 m/s ausgelegt ist.

7. Vorrichtung nach einem der Ansprüche 1 bis 5, **dadurch gekennzeichnet, dass** in der Walzstraße (1) wenigstens eine Scherengasse (6) vorgesehen ist, durch die erste oder die zweite Schere in die Walzlinie einfahrbar oder ausfahrbar ist.

8. Vorrichtung nach Anspruch 7, **dadurch gekennzeichnet, dass** ein Zwischenrollgang (8) vorgesehen ist, der in die Scherengasse (6) einfahrbar ist, wenn die erste und die zweite Schere sich in der Parkposition befinden.

9. Vorrichtung nach einem der Ansprüche 1 bis 8, **gekennzeichnet durch** ein Verschiebesystem für die Scheren, das so ausgebildet ist, dass die erste oder die zweite Schere jeweils quer und parallel zur Walzlinie verfahrbar sind.

10. Vorrichtung nach einem der Ansprüche 2 bis 9, **dadurch gekennzeichnet, dass** der gemeinsame Antrieb (7) vorzugsweise feststehend neben der Walzlinie auf einer der Parkposition der Scheren gegenüberliegenden Seite der Walzlinie angeordnet ist.

11. Vorrichtung nach einem der Ansprüche 1 bis 10, **dadurch gekennzeichnet, dass** der gemeinsame Antrieb (7) ein zweistufiges Getriebe mit einem separaten Getriebeausgang hinter der ersten Getriebestufe umfasst.

12. Vorrichtung nach einem der Ansprüche 1 bis 11, **dadurch gekennzeichnet, dass** die erste und die zweite Schere jeweils Mittel zum lösbaren Anschließen an den gemeinsamen Antrieb (7) aufweisen.

13. Vorrichtung nach einem der Ansprüche 1 bis 12, **dadurch gekennzeichnet, dass** der gemeinsame Antrieb (7) eine vorzugsweise ausstellbare Scherenkupplung (15) aufweist.

14. Vorrichtung nach einem der Ansprüche 1 bis 13, **dadurch gekennzeichnet, dass** der gemeinsame Antrieb (7) eine vorzugsweise ausstellbare Scherenspindel (16) aufweist.

15. Vorrichtung nach einem der Ansprüche 1 bis 14, **dadurch gekennzeichnet, dass** Mittel zur Bestimmung der Dicke und/oder der Geschwindigkeit des Metallbandes (5) vorgesehen sind.

16. Verfahren zum Querteilen eines Metallbandes in einer Walzstraße unter Verwendung einer Vorrichtung mit den Merkmalen eines der Ansprüche 1 bis 15, wobei das Verfahren eine Bestimmung der Dicke und/oder Geschwindigkeit und/oder Beschaffenheit des Bandes umfasst, wobei gegebenenfalls in Abhängigkeit der Bandgeschwindigkeit und/oder der Banddicke und/oder Beschaffenheit des Bandes die erste oder die zweite Schere ausgewählt und in die Walzlinie eingefahren wird.

17. Verfahren nach Anspruch 16, **dadurch gekennzeichnet, dass** der Zwischenrollgang in die Walzlinie eingefahren wird, wenn die erste und die zweite Schere sich in der Parkposition befinden.

18. Verfahren nach einem der Ansprüche 16 oder 17 **dadurch gekennzeichnet, dass** das Verfahren die automatische Einstellung des Bandzuges in Abhängigkeit der ausgewählten Schere umfasst.

19. Verfahren nach Anspruch 18, **dadurch gekennzeichnet, dass** der Bandzug vor und/oder hinter den Trenneinrichtungen mittels wenigstens einer Treibereinrichtung eingestellt wird.

20. Verfahren nach Anspruch 19, **dadurch gekennzeichnet, dass** mittels wenigstens eines Steuerungssystems in Abhängigkeit der gewählten Schere und des durchzuführenden Schnitts der Zeitpunkt für das in- und außer Eingriff bringen der Treibereinrichtung gesteuert wird.
